# EUROPÄISCHE PATENTANMELDUNG

(11) **EP 1 480 315 A2**
(43) Veröffentlichungstag der Anmeldung: **24.11.2004**
(21) Anmeldenummer: 04011818.4
(22) Anmeldetag: 18.05.2004
(51) Int. Cl.: H02K 5/08

(54) **Elektrisches Antriebssystem**

(30) Priorität: 23.05.2003 DE 10323255
(71) Anmelder: ZF FRIEDRICHSHAFEN Aktiengesellschaft, 88038 Friedrichshafen (DE)
(72) Erfinder: Sigg, Peter, 88090 Immenstaad (DE)

(57) **Zusammenfassung**

In einem elektrisches Antriebssystem mit mindestens einer doppelt isolierten elektrischen Maschine, die einen Rotor und einen Stator aufweist, wird eine doppelte Isolation der elektrischen Maschine durch eine isolierte Befestigung des Stators der elektrischen Maschine im Maschinengehäuse oder einem Kühler erreicht.

## Beschreibung

Die Erfindung betrifft ein elektrisches Antriebssystem (für Kfz) nach der im Oberbegriff von Anspruch 1 näher definierten Art.

Elektrische Antriebssysteme sind für eine Vielzahl von Anwendungen aus dem Stand der Technik bekannt. Der ungeplante Ausfall einer Komponente des elektrischen Antriebssystems kann in einem Fahrzeug ein Sicherheitsrisiko darstellen und zu erheblichen Kosten führen. Eine Hauptursache von Ausfällen von elektrischen Antriebssystemen sind defekte Isolationen, da sie einer Vielzahl von gemeinsam auftretenden Belastungen ausgesetzt sind, wie beispielsweise thermische, elektrische , umweltbedingte und mechanische Belastungen. Diese Belastungen können zu lokalen und globalen Veränderungen der dielektrischen und/oder Isolationseigenschaften des gesamten elektrischen Antriebssystems führen. Verschiedene Isolierwerkstoffe und Isolationsverfahren ermöglichen zwar eine längere Lebensdauer, erfordern allerdings auch einen erhöhten Aufwand. Zum Aufbau der Isolation werden eine Vielzahl unterschiedlicher Materialien eingesetzt wie Harze, Polymere, Faserwerkstoffe Folien, Beschichtungen und Bänder. Häufig werden Fehler in der Isolation von nichtelektrischen Vorgängen herbeigeführt, wie z.B. durch mechanische Probleme oder Überhitzen. Die Prüfung und Überwachung der Komponenten des elektrischen Antriebssystems zur Vorbeugung von Ausfällen ist deshalb unverzichtbar. Um die Sicherheit des elektrischen Antriebssystems zu gewährleisten sind umfangreiche Maßnahmen zur Überwachung und Prüfung des Zustandes der Isolation notwendig. Dies erfordert jedoch einen hohen Aufwand an Zeit, Investitionen und Kapazität.

Für bestimmte elektrisch angetriebene Fahrzeuge wie beispielsweise Trolleybusse ist eine doppelte Isolation aller stromführenden Teile aus Sicherheitsgründen vorgeschrieben. Dies wird durch eine komplett isolierte Befestigung und Kupplung der elektrischen Maschine des elektrischen Antriebssystems erreicht. Dies erfordert einen hohen Bedarf an Bauraum für eine isolierte Drehmomentübertragung und für eine isolierte Befestigung des gesamten Motorgehäuses im Fahrzeug.

Der vorliegenden Erfindung liegt die Aufgabe zugrunde ein elektrisches Antriebssystems darzustellen, das eine sicheren Betrieb im Zusammenwirken mit vorgeschriebenen bzw. geeigneten Überwachungs- und Prüfmechanismen gewährleistet, platzsparend untergebracht werden kann und für verschiedene Antriebskonzepte verwendet werden kann.

Die der Erfindung zugrundeliegende Aufgabe wird durch ein, auch die kennzeichnenden Merkmale des Hauptanspruchs aufweisendes, gattungsgemäßes elektrisches Antriebssystem gelöst.

Vorgeschlagen wird die Ausführung der doppelten Isolation durch eine isolierte Befestigung des Stators der elektrischen Maschine in der Kühlbuchse bzw. im Wasserkühler durch Vergießen bzw. Umspritzen des Statorblechpaketes in einer geringfügig größeren Bohrung des Maschinengehäuses oder der Kühlbuchse bzw. des Kühlers. Der mit einem geeigneten Isoliermaterial ausgegossene Spalt sorgt dabei sowohl für die erforderliche Zweitisolation als auch für die Befestigung des Stator im Gehäuse bzw. in der Antriebseinheit. Das erfindungsgemäße elektrische Antriebssystem eignet sich vor allem für solche Anwendungen, in dem die Forderung nach einer bauraumsparende Ausführung und nach einer doppelten Isolation besteht. Dadurch kann es auch beispielsweise für Radnabenantriebe bei Fahrzeugen verwendet werden. Durch das Vergießen bzw. Umspritzen des Blechpaketes des Stators werden Form- und Durchmesser-Toleranzen des Außendurchmesser des Stators und des Innendurchmessers der Befestigungsbohrung ausgeglichen, wodurch die Anforderungen an die Fertigungsgenauigkeit sehr gering sind. Nach dem Fügen ist die entstehende Einheit gut gegen Beschädigungen der Isolationsschicht geschützt. Das bisherige Einpressen des Stators in den Kühler bzw. in das Maschinengehäuse kann entfallen, wodurch sich erhebliche Kostenvorteile ergeben. Durch die Isolation des Stators vom Fahrzeug ergeben sich Vorteile bezüglich der Rückführung der durch den Wechselrichter bedingten kapazitiven Ableitströme und der EMV.

## Patentansprüche

1. Elektrisches Antriebssystem mit mindestens einer doppelt isolierten elektrischen Maschine, die einen Rotor und einen Stator aufweist, **dadurch gekennzeichnet, daß** die doppelte Isolation der elektrischen Maschine durch eine isolierte Befestigung des Stators der elektrischen Maschine im Maschinengehäuse oder in einem Kühler erreicht wird.

2. Elektrisches Antriebssystem nach Anspruch 1, **dadurch gekennzeichnet, daß** die isolierte Befestigung des Stators der elektrischen Maschine im Maschinengehäuse bzw. in dem Kühler durch Vergießen bzw. Umspritzen eines Blechpaketes des Stators erfolgt.

3. Elektrisches Antriebssystem nach Anspruch 1 und 2, **dadurch gekennzeichnet, daß** das Maschinengehäuse bzw. der Kühler eine Bohrung aufweist, deren Innendurchmesser geringfügig größer ist wie der Außendurchmesser des Blechpaketes des Stators der elektrischen Maschine.

4. Verwendung eines elektrischen Antriebssystems nach einem der vorangegangenen Ansprüche bei Kraftfahrzeugen, Schienenfahrzeugen, Werkzeugmaschinen und Industrierobotern.
